# EUROPEAN PATENT APPLICATION

(11) **EP 4 779 183 A1**
(43) Date of publication of application: **22.07.2026**
(21) Application number: 24865410.5
(22) Date of filing: 09.09.2024
(51) Int. Cl.: F16K 11/00, F16K 11/10, F16K 15/02, F25B 13/00

(54) **DIFFERENTIAL PRESSURE SELECTOR VALVE**

(30) Priority: 12.09.2023 JP 2023147499
(71) Applicant: Eagle Industry Co., Ltd., Minato-ku Tokyo 105-8587 (JP)
(72) Inventor: OGAWA, Noriyuki, Tokyo 105-8587 (JP); OGAWA, Yoshihiro, Tokyo 105-8587 (JP); MATSUZAKI, Akitaka, Tokyo 105-8587 (JP); KAWATO, Tadanobu, Tokyo 105-8587 (JP); AKIYOSHI, Norimitsu, Tokyo 105-8587 (JP); KONDO, Shinji, Tokyo 105-8587 (JP); ENOKIJIMA, Fuminobu, Kariya-shi, Aichi 448-8671 (JP); TAKEYAMA, Yukihiro, Kariya-shi, Aichi 448-8671 (JP)
(74) Representative: Patentquadrat Patentanwaltsgesellschaft mbH
(86) International application number: PCT/JP2024/032252
(87) International publication number: WO 2025/057910

(57) **Abstract**

To provide a differential pressure switching valve that can switch between flow paths at an appropriate timing.

A differential pressure switching valve includes a low-pressure inlet port P3, a high-pressure outlet port P4, a first port P1, and a second port P2. Differential pressure on-off valves 2, 3 are provided in a flow path between the low-pressure inlet port P3 and the first port P1 and in a flow path between the low-pressure inlet port P3 and the second port P2, respectively. The high-pressure outlet port P4 is in communication with the first port P1 and the second port P2, and differential pressure on-off valves 4, 5 are provided by which flow paths for an outflow to the high-pressure outlet port P4 are switched depending on the pressures at the first port P1 and the second port P2.

## Description

### {TECHNICAL FIELD}

The present invention relates to a differential pressure switching valve, for example, a differential pressure switching valve that switches between flow paths through which a fluid flows.

### {BACKGROUND ART}

In various industrial fields, fluid circuits in which a fluid supply source and a fluid load such as a fluid working device or a heat exchanger are connected by a flow path are used. Some such fluid circuits are provided with a switching valve that switches between the flow paths of the working fluid, thereby realizing a plurality of modes for operating the fluid load with a single fluid circuit.

For example, a fluid circuit in Patent Citation 1 mainly includes a compressor, a first switching valve, an outdoor heat exchanger, a second switching valve, a first pressure reducing device, a gas-liquid separator, a second pressure reducing device, and an indoor heat exchanger. The first switching valve is a four-way valve and is for switching the flow direction of a refrigerant by external power depending on whether cooling or heating operation is performed.

The second switching valve is a four-way valve and is for switching the flow direction of the refrigerant by external power so that the high-pressure refrigerant flowing into the second switching valve from the outdoor heat exchanger or the indoor heat exchanger passes through the first pressure reducing device, the gas-liquid separator, and the second pressure reducing device in that order and then flows into the heat exchanger through which the refrigerant has not yet passed.

Accordingly, the fluid circuit in Patent Citation 1 recovers the gas-phase refrigerant, which contributes little to heat absorption, in the gas-liquid separator, regardless of whether cooling or heating operation is performed, and allows the liquid-phase refrigerant, which contributes to heat absorption, to pass preferentially through the outdoor heat exchanger or the indoor heat exchanger, thereby increasing the cooling or heating performance.

### {CITATION LIST}

### {Patent Literature}

Patent Citation 1: JP 2001-241797 A (Pages 4 and 5, FIG. 1)

### {SUMMARY OF INVENTION}

### {Technical Problem}

Accordingly, in the fluid circuit equipped with the second switching valve such as that described in Patent Citation 1, regardless of the operating mode, the fluid can be passed in a predetermined direction or through a first device, and then flowed in an appropriate direction or into a second device.

However, when the first and second four-way valves are switched simultaneously by an external power to switch the operating mode during operation, even though the refrigerant immediately after passing through the second switching valve is at high pressure, it is connected to the heat exchanger side into which the low-pressure refrigerant had been flowing. This causes the refrigerants in both flow paths to mix and prevents the pressures in both flow paths from being maintained at the predetermined pressure, which may reduce the efficiency of the refrigeration cycle. To maintain the pressures in both flow paths at the predetermined pressure, it is necessary to individually control the timing of switching the first and second four-way valves according to changes in the refrigerant pressure in each device.

The present invention has been made in view of such problems, and an object of the present invention is to provide a differential pressure switching valve that can switch between flow paths at appropriate timing.

### {Solution to Problem}

In order to solve the foregoing problems, a differential pressure switching valve according to the present invention includes: a low-pressure inlet port; a high-pressure outlet port; a first port; and a second port, wherein first differential pressure on-off valves are provided in a flow path between the low-pressure inlet port and the first port and in a flow path between the low-pressure inlet port and the second port, respectively, and the high-pressure outlet port is in communication with the first port and the second port, and at least one second differential pressure on-off valves is provided by which flow paths for an outflow to the high-pressure outlet port are switched depending on pressures at the first port and the second port. According to the aforesaid feature of the present invention, the flow paths are switched by the differential pressure caused by the change in the fluid pressure at the first port and the fluid pressure at the second port, thereby eliminating the need for switching control with specific power.

It may be preferable that the first differential pressure on-off valve provided in the flow path between the low-pressure inlet port and the first port and the first differential pressure on-off valve provided in the flow path between the low-pressure inlet port and the second port are first check valves. According to this preferable configuration, the structure can be simplified.

It may be preferable that the first check valves are disposed such that an inflow from the first port and the second port to the low-pressure inlet port is prevented. According to this preferable configuration, the flow paths communicating with the low-pressure inlet port can be switched with a simple configuration.

It may be preferable that the second differential pressure on-off valves are check valves provided in a flow path between the high-pressure outlet port and the first port and in a flow path between the high-pressure outlet port and the second port, respectively. According to this preferable configuration, the structure can be simplified.

It may be preferable that the second check valves are disposed such that an inflow from the high-pressure outlet port to the first port and the second port is prevented. According to this preferable configuration, the flow paths communicating with the high-pressure outlet port can be switched with a simple configuration.

It may be preferable that all of the first differential pressure on-off valves and the second differential pressure on-off valves are disposed in a single housing. According to this preferable configuration, it is easy to assemble to and detach from a fluid circuit.

### {BRIEF DESCRIPTION OF DRAWINGS}

FIG. 1 is a sectional view of a differential pressure switching valve according to a first embodiment of the present invention.
FIG. 2 is a sectional view illustrating the differential pressure switching valve according to the first embodiment in a state where the flow path is switched to a flow path different from that in FIG. 1.
FIG. 3 is a sectional view of a differential pressure switching valve according to a second embodiment of the present invention.
FIG. 4 is a sectional view illustrating the differential pressure switching valve according to the second embodiment in a state where the flow path is switched to a flow path different from that in FIG. 3.

### {DESCRIPTION OF EMBODIMENTS}

Modes for implementing a differential pressure switching valve according to the present invention will be described below based on embodiments.

### {First embodiment}

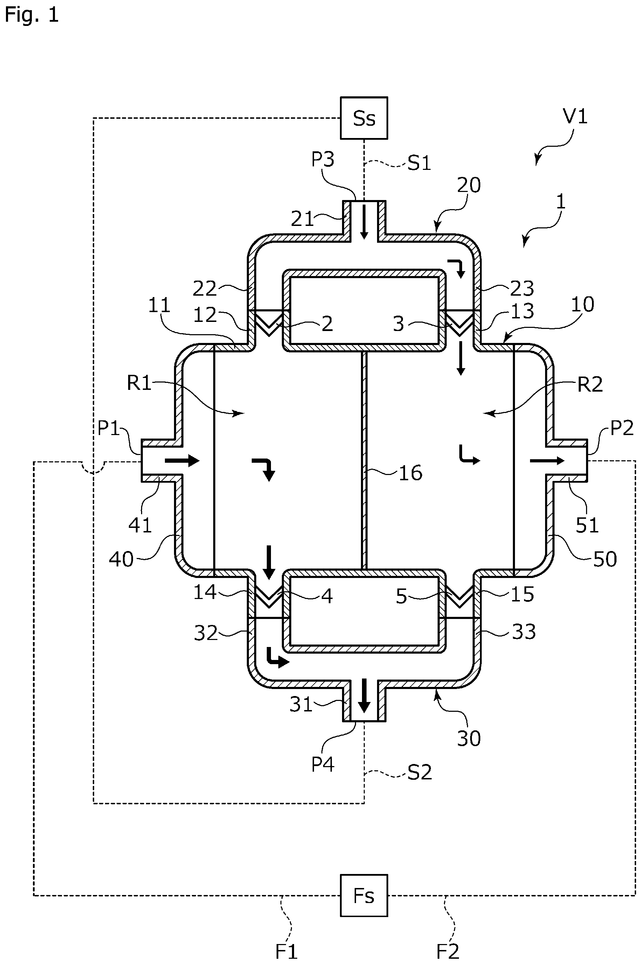

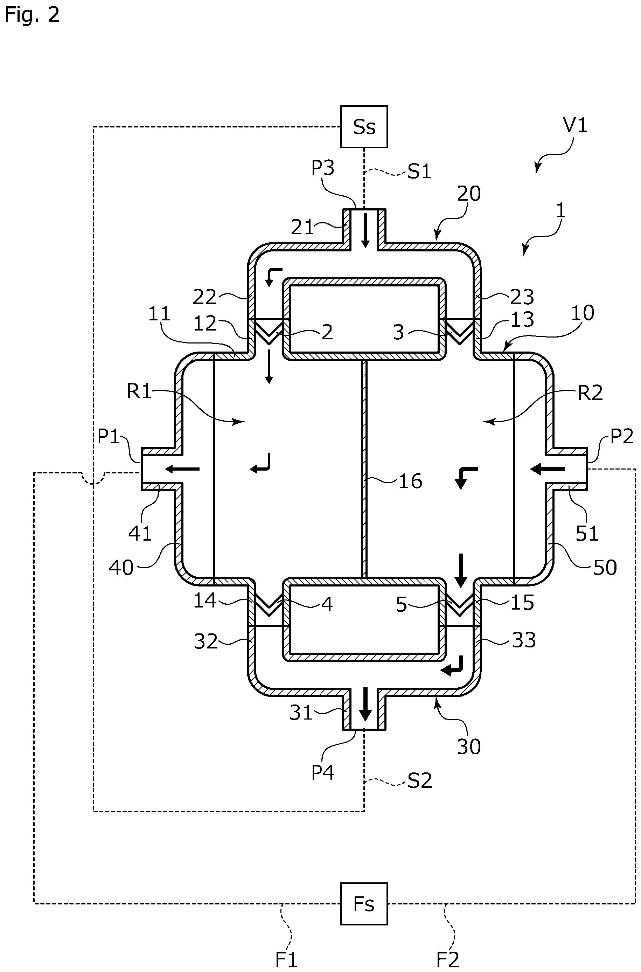

A differential pressure switching valve according to a first embodiment of the present invention will be described with reference to FIGS. 1 and 2. Hereinafter, the description will be made based on the assumption that the top, bottom, right, and left of the drawing sheet of FIG. 1 is top, bottom, right, and left of a refrigerant switching valve.

As illustrated in FIG. 1, a differential pressure switching valve V1 of the present invention is a four-way valve provided in a fluid circuit and is for switching the flow direction between a first device Fs and a second device Ss in the fluid circuit. In the present embodiment, a compressor (not illustrated) provided in the first device Fs increases the pressure of the fluid flowing through the fluid circuit, and a pressure reducer (not illustrated) provided in the second device Ss reduces the pressure of the fluid.

The differential pressure switching valve V1 mainly includes a housing 1, a first low-pressure-side check valve 2, a second low-pressure-side check valve 3, a first high-pressure-side check valve 4, and a second high-pressure-side check valve 5. Incidentally, the check valves 2, 3, 4, and 5 are illustrated schematically in FIGS. 1 and 2.

The housing 1 mainly includes a base member 10, a low-pressure-side branch member 20, a high-pressure-side branch member 30, a first-side cover member 40, and a second-side cover member 50.

The base member 10 has a base 11 formed in a cylindrical shape extending in the right-left direction, four protrusions 12, 13, 14, and 15 protruding in radially outward direction from the base 11, and a partition wall 16.

The space within the base 11 is divided into right and left spaces by a disk-shaped partition wall 16 that is welded and fixed to the interior of the base 11 in a sealed manner. The space on the left side of the partition wall 16 is a first-side space R1, and the space on the right side of the partition wall 16 is a second-side space R2.

Incidentally, the partition wall 16 is disposed in a sealed manner relative to the base 11 by welding; however, the present invention is not limited thereto, the partition wall may be disposed in sealed manner with a seal member, or the partition wall and the base may be integrally molded, and the configuration may be changed as appropriate. This also applies to the other members constituting the housing 1.

The protrusions 12, 13, 14, and 15 are formed in a cylindrical shape. Two of the protrusions 12, 13 are provided on the upper side and are disposed in a straight line in the right-left direction. The other two protrusions 14, 15 are provided on the lower side and are disposed in a straight line in the right-left direction.

In addition, the protrusions 12, 14 are provided on the left side of the peripheral wall of the base member 10. The protrusions 13, 15 are provided on the right side of the peripheral wall of the base member 10.

The flow path within the protrusion 12 is in communication with the first-side space R1. In addition, the first low-pressure-side check valve 2 is provided in the flow path within the protrusion 12. The first low-pressure side check valve 2 is disposed in a direction that prevents a fluid from flowing from the first-side space R1 into a low-pressure inlet port P3 described later.

The flow path within the protrusion 13 is in communication with the second-side space R2. In addition, the second low-pressure-side check valve 3 is provided in the flow path within the protrusion 13. The second low-pressure-side check valve 3 is disposed in a direction that prevents a fluid from flowing from the second-side space R2 into the low-pressure inlet port P3.

The flow path within the protrusion 14 is in communication with the first-side space R1. In addition, the first high-pressure-side check valve 4 is provided in the flow path within the protrusion 14. The first high-pressure-side check valve 4 is disposed in a direction that prevents a fluid from flowing from a high-pressure outlet port P4 described later into the first-side space R1.

The flow path within the protrusion 15 is in communication with the second-side space R2. In addition, the second high-pressure-side check valve 5 is provided in the flow path within the protrusion 15. The second high-pressure-side check valve 5 is disposed in a direction that prevents a fluid from flowing from the high-pressure outlet port P4 described later into the second-side space R2.

The low-pressure-side branch member 20 has a neck 21, a first-side arm 22, and a second-side arm 3, and is formed in an inverted Y shape.

The neck 21 is formed in a cylindrical shape extending in the up-down direction. In addition, the lower end of the space within the neck 21 is in communication with a space extending in the right-left direction. Namely, the flow path within the neck 21 is in communication with the flow path within the first-side arm 22 and the flow path within the second-side arm 23.

In addition, the flow path within the neck 21 is in communication with a low-pressure flow path S1 through which the low-pressure fluid reduced in pressure by the second device Ss flows toward the neck 21. Namely, in the flow path within the neck 21, an opening in communication with the low-pressure flow path S1 is the low-pressure inlet port P3 through which the low-pressure fluid flows in.

The first-side arm 22 is formed in a cylindrical shape that extends leftward from the lower left end of the neck 21, then curves downward at approximately 90 degrees, and extends downward. The first-side arm 22 is welded and fixed to the protrusion 12 of the base member 10 in a sealed manner. The flow path within the first-side arm 22 is in communication with the flow path within the protrusion 12.

The second-side arm 23 is formed in a cylindrical shape that extends rightward from the right lower end of the neck 21, then curves downward at approximately 90 degrees, and extends downward. The second-side arm 23 is welded and fixed to the protrusion 13 of the base member 10 in a sealed manner. The flow path within the second-side arm 23 is in communication with the flow path within the protrusion 13.

The high-pressure-side branch member 30 has a neck 31, a first-side arm 32, and a second-side arm 33 and is formed in a Y-shape.

The neck 31 is formed in a cylindrical shape extending in the up-down direction. In addition, the upper end of the space within the neck 31 is in communication with a space extending in the right-left direction. The flow path within the neck 31 is in communication with the flow path within the first-side arm 32 and the flow path within the second-side arm 33.

In addition, the flow path within the neck 31 is in communication with a high-pressure flow path S2 through which the high-pressure fluid increased in pressure by the first device Fs flows toward the second device Ss. Namely, in the flow path within the neck 31, an opening in communication with the high-pressure flow path S2 is the high-pressure outlet port P4 through which the high-pressure fluid flows out.

The first-side arm 32 is formed in a cylindrical shape that extends leftward from the upper left end of the neck 31, then curves upward by approximately 90 degrees, and extends upward. The first-side arm 32 is welded and fixed to the protrusion 14 of the base member 10 in a sealed manner. The flow path within the first-side arm 32 is in communication with the flow path within the protrusion 14.

The second-side arm 33 is formed in a cylindrical shape that extends rightward from the upper right end of the neck 31, then curves upward by approximately 90 degrees, and extends upward. The second-side arm 33 is welded and fixed to the protrusion 15 of the base member 10 in a sealed manner. The flow path within the second-side arm 33 is in communication with the flow path within the protrusion 15.

The first-side cover member 40 is formed in a cylindrical shape with a side wall which is open on the right side in the axial direction and has a side wall on the left side in the axial direction. The first-side cover member 40 is welded and fixed to the base 11 of the base member 10 in a sealed manner. Accordingly, the space within the first-side cover member 40, together with the space on the left side within the base 11, constitutes the first-side space R1.

In addition, the first-side cover member 40 has a tubular extension 41 extending toward the left side in the axial direction from the center of the side wall. The flow path within the extension 41 is in communication with the first-side space R1.

In addition, the flow path within the extension 41 is in communication with a first flow path F1 extending from the first device Fs. Namely, in the flow path within the extension 41, an opening in communication with the first flow path F1 is a first port P1 through which the high-pressure fluid flows in (see FIG. 1) or the low-pressure fluid flows out (see FIG. 2) as described in detail later.

The second-side cover member 50 is formed in a cylindrical shape with a side wall which is open on the left side in the axial direction and has a side wall on the right side in the axial direction. The second-side cover member 50 is welded and fixed to the base 11 of the base member 10 in a sealed manner. Accordingly, the space within the second-side cover member 50, together with the space on the right side within the base 11, constitutes the second-side space R2.

In addition, the second-side cover member 50 has a tubular extension 51 extending toward the right side in the axial direction from the center of the side wall. The flow path within the extension 51 is in communication with the second-side space R2.

In addition, the flow path within the extension 51 is in communication with a second flow path F2 extending from the first device Fs. Namely, in the flow path within the extension 51, an opening in communication with the second flow path F2 is a second port P2 through which the low-pressure fluid flows out (see FIG. 1) or the high-pressure fluid flows in (see FIG. 2) as described in detail later.

Next, the switching of the flow paths in the differential pressure switching valve V1 will be described. Incidentally, the switching between delivering the high-pressure fluid to the first flow path F1 and drawing in the low-pressure fluid from the second flow path F2, and delivering the high-pressure fluid to the second flow path F2 and drawing in the low-pressure fluid from the first flow path F1, is controlled on the side of the first device Fs.

First, referring to FIG. 1, a state where the high-pressure fluid flows into the first port P1 and the low-pressure fluid flows out of the second port P2 will be described. As indicated by the thick arrow in FIG. 1, the high-pressure fluid flows into the first-side space R1 through the first port P1.

The high-pressure fluid that has flowed into the first-side space R1 passes through the first high-pressure-side check valve 4 and flows into the flow path within the high-pressure-side branch member 30. In addition, the high-pressure fluid that has flowed into the first-side space R1 is prevented from flowing into the flow path within the low-pressure-side branch member 20 by the first low-pressure-side check valve 2.

The high-pressure fluid that has flowed into the flow path within the high-pressure-side branch member 30 flows out from the high-pressure outlet port P4 to the high-pressure flow path S2. In addition, the high-pressure fluid that has flowed into the flow path within the high-pressure-side branch member 30 is prevented from flowing into the second-side space R2 by the second high-pressure-side check valve 5.

Accordingly, the high-pressure fluid that has flowed into the first-side space R1 is prevented from being mixed with the low-pressure fluid.

As indicated by the thin arrow in FIG. 1, the low-pressure fluid flows into the flow path within the low-pressure-side branch member 20 through the low-pressure inlet port P3.

The low-pressure fluid that has flowed into the flow path within the low-pressure-side branch member 20 passes through the second low-pressure-side check valve 3 and flows into the second-side space R2. In addition, the first low-pressure-side check valve 2 is closed by the pressure in the first-side space R1 into which the high-pressure fluid is flowing.

The low-pressure fluid that has flowed into the second-side space R2 flows out from the second port P2 to the second flow path F2. In addition, the second high-pressure-side check valve 5 is closed by the pressure in the flow path within the second-side arm 33 into which the high-pressure fluid is flowing.

Accordingly, the low-pressure fluid that has flowed into the second-side space R2 is prevented from being mixed with the high-pressure fluid.

Immediately after the transition from the state in FIG. 1 to the state in FIG. 2, namely, immediately after the flow paths on the side of the first device Fs are switched so that the high-pressure fluid is sent from the first device Fs to the second flow path F2 and the low-pressure fluid is drawn from the first flow path F1 into the first device Fs under control of the side of the first device Fs, the pressure in the first flow path F1, into which the high-pressure fluid had been flowing until just before, decreases.

The fluid in the first-side space R1 flows out through the first port P1 to the first flow path F1 as indicated by the thin arrow. Accordingly, the pressure in the first-side space R1 also decreases.

Even when the pressure in the first-side space R1 decreases and the pressure in the flow path within the high-pressure-side branch member 30 is higher, the fluid in the flow path within the high-pressure-side branch member 30 is prevented from flowing into the first-side space R1 by the first high-pressure-side check valve 4. Accordingly, the pressure in the first-side space R1 can be efficiently reduced.

In addition, the first high-pressure-side check valve 4 is closed by the pressure in the flow path within the high-pressure-side branch member 30. Accordingly, the fluid in the first-side space R1, which has a pressure lower than the high-pressure fluid, is prevented from flowing into the flow path within the high-pressure-side branch member 30.

In addition, when the pressure in the first-side space R1 exceeds the pressure in the flow path within the low-pressure-side branch member 20, the first low-pressure-side check valve 2 remains closed. Accordingly, the pressure in the first-side space R1 can be reduced more efficiently.

Additionally, fluid with a pressure higher than the low-pressure fluid is prevented from flowing into the flow path within the low-pressure-side branch member 20.

When the pressure in the first-side space R1 is no more than the pressure in the flow path within the low-pressure-side branch member 20, the first low-pressure-side check valve 2 is opened, and the low-pressure fluid that had been flowing into the flow path within the low-pressure-side branch member 20 passes through the first low-pressure-side check valve 2 and flows into the first-side space R1, as indicated by the thin arrow in FIG. 2. At this time, the difference between the pressure in the flow path within the low-pressure-side branch member 20 and the pressure in the first-side space R1 is almost zero.

Meanwhile, the high-pressure fluid delivered from the first device Fs to the second flow path F2 flows into the second-side space R2 through the second port P2, as indicated by the thick arrow in FIG. 2. Accordingly, the pressure in the second-side space R2 also increases.

When the pressure in the second-side space R2 increases and becomes higher than the pressure in the flow path within the low-pressure-side branch member 20, the second low-pressure-side check valve 3 is closed. Accordingly, the fluid in the flow path within the low-pressure-side branch member 20 is prevented from flowing into the second-side space R2, so that the pressure in the second-side space R2 can be increased efficiently.

In addition, the fluid in the second-side space R2, which is at a pressure higher than the low-pressure fluid, is prevented from flowing into the flow path within the low-pressure-side branch member 20 by the second low-pressure-side check valve 3.

In addition, if the pressure in the second-side space R2 is below the pressure in the flow path within the high-pressure-side branch member 30, the second high-pressure-side check valve 5 remains closed. Accordingly, the pressure in the second-side space R2 can be increased more efficiently.

Additionally, fluid with a pressure lower than the high-pressure fluid is prevented from flowing into the flow path within the high-pressure-side branch member 30.

When the pressure in the second-side space R2 is equal to or greater than the pressure in the flow path within the high-pressure-side branch member 30, the second high-pressure-side check valve 5 is opened, and the high-pressure fluid that had been flowing into the second-side space R2 passes through the second high-pressure-side check valve 5 and flows into the flow path within the high-pressure-side branch member 30, as indicated by the thick arrow. At this time, the difference between the pressure in the second-side space R2 and the pressure in the flow path within the high-pressure-side branch member 30 is almost zero.

As described above, immediately after transitioning from the state in FIG. 1 to the state in FIG. 2, the differential pressure switching valve V1 can perform switching control without any specific power while preventing fluids with different pressures from being mixed.

The switching control described above is also applicable immediately after transitioning from the state in FIG. 2 to the state in FIG. 1, namely, when the flow paths on the side of the first device Fs are switched so that the high-pressure fluid is delivered from the first device Fs to the first flow path F1 and the low-pressure fluid is drawn from the second flow path F2 into the first device Fs.

Namely, immediately after the flow paths on the side of the first device Fs are switched so that the high-pressure fluid is delivered from the first device Fs to the first flow path F1 and the low-pressure fluid is drawn from the second flow path F2 into the first device Fs, when the pressure in the first-side space R1 is lower than the pressure in the flow path within the high-pressure side branch member 30, the differential pressure switching valve V1 makes the first port P1 and the high-pressure outlet port P4 not in communication with each other. Thereafter, when the pressure in the first-side space R1 becomes equal to or higher than the pressure in the flow path within the high-pressure side branch member 30, the differential pressure switching valve V1 makes the first port P1 and the high-pressure outlet port P4 in communication with each other.

In addition, immediately after the flow paths on the side of the first device Fs are switched so that the high-pressure fluid is delivered from the first device Fs to the first flow path F1 and the low-pressure fluid is drawn from the second flow path F2 into the first device Fs, when the pressure in the second-side space R2 exceeds the pressure in the flow path within the low-pressure-side branch member 20, the differential pressure switching valve V1 makes the second port P2 and the low-pressure inlet port P3 not in communication with each other. Thereafter, when the pressure in the second-side space R2 becomes equal to or lower than the pressure in the flow path within the low-pressure-side branch member 20, the differential pressure switching valve V1 makes the second port P2 and the low-pressure inlet port P3 in communication with each other.

As described above, the differential pressure switching valve V1 can perform switching control without any specific power while preventing fluids with different pressures from being mixed, even immediately after transitioning from the state in FIG. 2 to the state in FIG. 1.

As described above, in the differential pressure switching valve V1 according to the present embodiment, differential pressure switching valve V1 has a simple structure in which the differential pressure on-off valve provided in the flow path between the low-pressure inlet port P3 and the first port P1 is the first low-pressure-side check valve 2, and the differential pressure on-off valve provided in the flow path between the low-pressure inlet port P3 and the second port P2 is the second low-pressure-side check valve 3.

In addition, the first low-pressure-side check valve 2 is disposed in a direction that prevents a fluid from flowing from the first port P1 into the low-pressure inlet port P3. The second low-pressure-side check valve 3 is disposed in a direction that prevents a fluid from flowing from the second port P2 into the low-pressure inlet port P3. Accordingly, the differential pressure switching valve V1 can switch between the flow paths communicating with the low-pressure inlet port P3 with a simple configuration.

In addition, the differential pressure switching valve V1 has a simple structure in which the differential pressure on-off valve provided in the flow path between the high-pressure outlet port P4 and the first port P1 is the first high-pressure-side check valve 4, and the differential pressure on-off valve provided in the flow path between the high-pressure outlet port P4 and the second port P2 is the second high-pressure-side check valve 5.

In addition, the first high-pressure-side check valve 4 is disposed in a direction that prevents fluid from flowing from the high-pressure outlet port P4 into the first port P1. The second high-pressure-side check valve 5 is disposed in a direction that prevents fluid from flowing from the high-pressure outlet port P4 into the second port P2. Accordingly, the flow paths communicating with the high-pressure outlet port P4 can be switched with a simple configuration.

In addition, since all of the check valves 2, 3, 4, and 5 are disposed in the single housing 1, the differential pressure switching valve V1 can be easily attached to and detached from the fluid circuit. Further, it has a simple structure in which the base member 10 is provided with the partition wall 16 and the four check valves 2, 3, 4, and 5 are disposed.

In addition, the first-side space R1 and the second-side space R2 are separated by the single partition wall 16. In other words, pressures higher than atmospheric pressure act on the partition wall 16 from both the first-side space R1 and the second-side space R2. The difference between the pressures acting on opposite sides of the partition wall 16 is smaller than the difference between the pressures acting on the peripheral wall of the base member 10, which is disposed to face the atmosphere. Accordingly, the thickness of the partition wall 16 required to withstand the fluid pressure can be made thinner than the thickness of the portion facing atmospheric pressure.

In addition, since the fluid flowing through the first device Fs and the fluid flowing through the second device Ss are the same type of fluid, they can be mixed as long as the pressure is approximately constant, so that the switching control of the differential pressure switching valve V1 can be simplified.

### {Second embodiment}

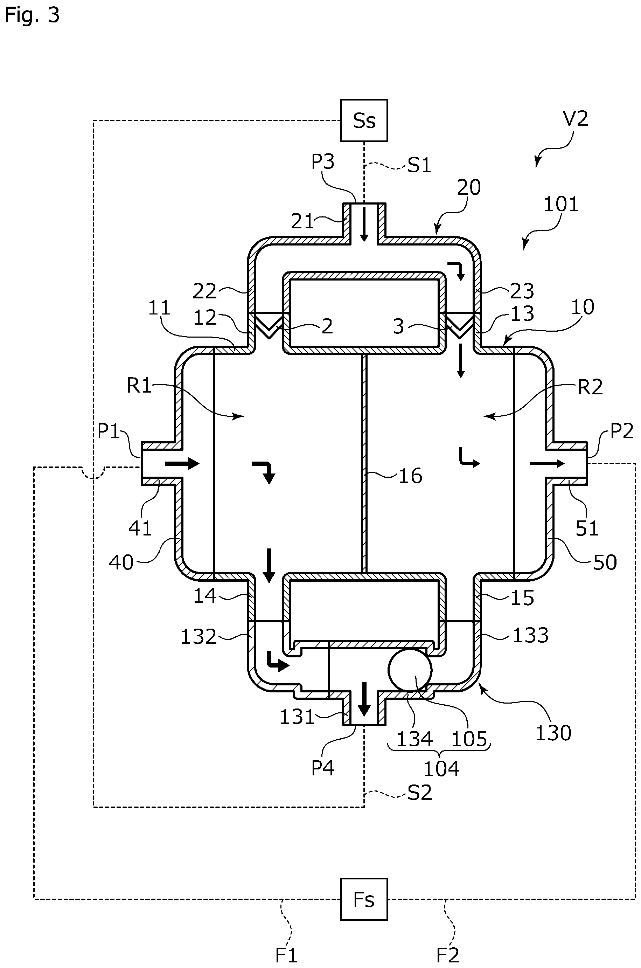

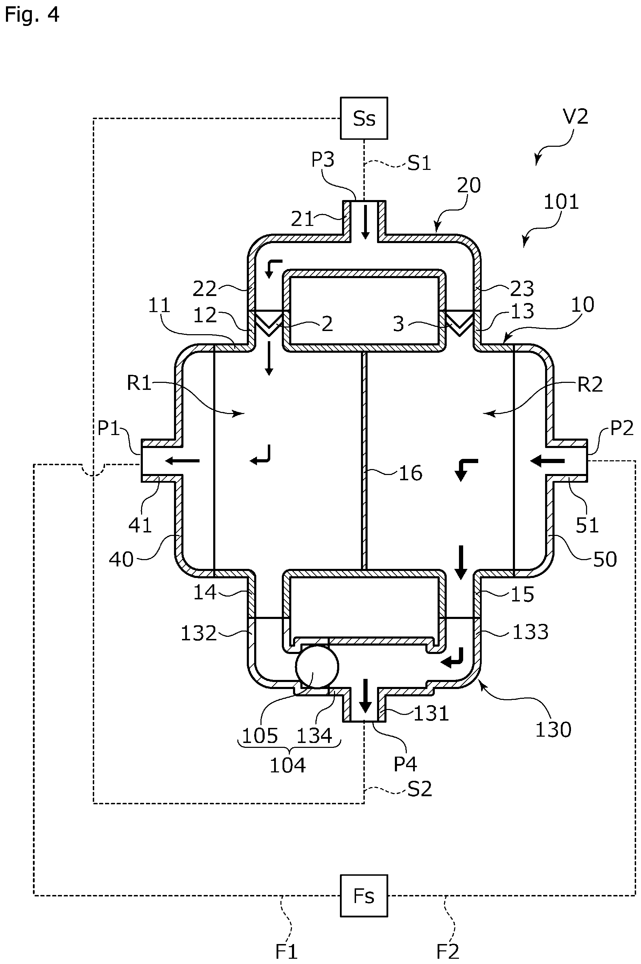

Next, a differential pressure switching valve according to a second embodiment of the present invention will be described with reference to FIGS. 3 and 4. Incidentally, the description of configurations that are the same as and overlap with the configurations of the first embodiment will be omitted.

As illustrated in FIG. 3, a differential pressure switching valve V2 of the second embodiment differs from the differential pressure switching valve V1 of the embodiment described above in that the check valves 4 and 5 are omitted, while a differential pressure on-off valve 104 is provided in a high-pressure-side branch member 130.

The high-pressure-side branch member 130 has a neck 131, a first-side arm 132, a second-side arm 133, an enlarged diameter portion 134, and a ball 105. The enlarged diameter portion 134 and the ball 105 constitute the differential pressure on-off valve 104.

The enlarged diameter portion 134 is formed in a cylindrical shape with side walls extending in the right-left direction, and has a flow path cross-sectional area larger than the flow path cross-sectional areas of the neck 131, the first-side arm 132, and the second-side arm 133.

The neck 131 is cylindrical and protrudes toward a radially outward direction from the center of the peripheral wall of the enlarged diameter portion 134 in the axial direction. The first-side arm 132 is cylindrical and extends to the left side from the center of the left wall of the enlarged diameter portion 134 in the radial direction, then curves upward at approximately 90 degrees, and extends upward. The second-side arm 133 is cylindrical and extends to the right side from the center of the right wall of the enlarged diameter portion 134 in the radial direction, then curves upward at approximately 90 degrees, and extends upward.

In addition, the ball 105 is disposed in the flow path within the enlarged diameter portion 134. The ball 105 has a diameter slightly smaller than the flow path within the enlarged diameter portion 134 and larger than the flow path cross-sectional areas of the neck 131, the first-side arm 132, and the second-side arm 133.

With this configuration, immediately after the flow paths on the side of the first device Fs are switched under control of the side of the first device Fs so that the high-pressure fluid is delivered from the first device Fs to the first flow path F1 and the low-pressure fluid is drawn from the second flow path F2 into the first device Fs, the pressure in the first-side space R1 is increasing while the decreasing pressure in the second-side space R2 is greater. Therefore, referring to FIG. 4, the ball 105 closes communication between the flow path within the first-side arm 132 and the flow path within the neck 131.

When the increasing pressure in the first-side space R1 exceeds the decreasing pressure in the second-side space R2, the ball 105 moves to the right side in the axial direction, and as illustrated in FIG. 3, communication between the flow path within the first-side arm 132 and the flow path within the neck 131 is opened, and communication between the flow path within the second-side arm 133 and the flow path within the neck 131 is closed.

Similarly, immediately after the flow paths on the side of the first device Fs are switched so that the high-pressure fluid is delivered from the first device Fs to the second flow path F2 and the low-pressure fluid is drawn from the first flow path F1 into the first device Fs, the pressure in the second-side space R2 is increasing while the decreasing pressure in the first-side space R1 is greater. Therefore, as illustrated in FIG. 3, the ball 105 closes communication between the flow path within the second-side arm 133 and the flow path within the neck 131.

When the increasing pressure in the second-side space R2 exceeds the decreasing pressure in the first-side space R1, the ball 105 moves to the left side in the axial direction, and as illustrated in FIG. 4, communication between the flow path within the second-side arm 133 and the flow path within the neck 131 is opened, and communication between the flow path within the first-side arm 132 and the flow path within the neck 131 is closed.

As described above, the differential pressure switching valve V2 can perform switching control without any specific power while preventing fluids with different pressures from being mixed.

The embodiments of the present invention have been described above with reference to the drawings; however, the specific configurations are not limited to the embodiments, and changes or additions that are made without departing from the scope of the present invention are included in the present invention.

For example, in the first and second embodiments, the differential pressure switching valve is described as being provided between a first device in which the fluid is pressurized and a second device in which the fluid is depressurized; however, the present invention is not limited thereto, and the differential pressure switching valve may also be provided in a third device provided between the first device and the second device, and the configuration of the fluid circuit may be changed as appropriate.

In addition, in the first and second embodiments, all the differential pressure on-off valves are described as being disposed in the single housing; however, the present invention is not limited thereto, and they may be disposed in a plurality of housings in a distributed manner.

In addition, in the first and second embodiments, the space within the housing is described as being divided by one partition wall; however, the present invention is not limited thereto, and the space within the housing may be divided by two or more partition walls. In addition, when two or more partition walls are provided, preferably, heat exchange between the fluid flowing into the first-side space and the fluid flowing into the second-side space may be prevented by filling the space between the partition walls with a heat insulating material, creating a vacuum, or the like.

### {REFERENCE SIGNS LIST}

1 Housing
2 First low-pressure-side check valve (first differential pressure on-off valve)
3 Second low-pressure-side check valve (first differential pressure on-off valve)
4 First high-pressure-side check valve (second differential pressure on-off valve)
5 Second high-pressure-side check valve (second differential pressure on-off valve)
16 Partition wall
104 Differential pressure on-off valve (second differential pressure on-off valve)
F1 First flow path
F2 Second flow path
Fs First device
P1 First port
P2 Second port
P3 Low-pressure inlet port
P4 High-pressure outlet port
R1 First-side space
R2 Second-side space
S1 Low-pressure flow path
S2 High-pressure flow path
Ss Second device
V1, V2 Differential pressure switching valve

## Claims

1. A differential pressure switching valve, comprising:
a low-pressure inlet port; a high-pressure outlet port; a first port; and a second port, wherein
first differential pressure on-off valves are provided in a flow path between the low-pressure inlet port and the first port and in a flow path between the low-pressure inlet port and the second port, respectively, and
the high-pressure outlet port is in communication with the first port and the second port, and
at least one second differential pressure on-off valve is provided by which flow paths for an outflow to the high-pressure outlet port are switched depending on pressures at the first port and the second port.

2. The differential pressure switching valve according to claim 1, wherein
the first differential pressure on-off valve provided in the flow path between the low-pressure inlet port and the first port and the first differential pressure on-off valve provided in the flow path between the low-pressure inlet port and the second port are first check valves.

3. The differential pressure switching valve according to claim 2, wherein
the first check valves are disposed such that an inflow from the first port and the second port to the low-pressure inlet port is prevented.

4. The differential pressure switching valve according to claim 1, wherein
the second differential pressure on-off valves are second check valves provided in a flow path between the high-pressure outlet port and the first port and in a flow path between the high-pressure outlet port and the second port, respectively.

5. The differential pressure switching valve according to claim 4, wherein
the second check valves are disposed such that an inflow from the high-pressure outlet port to the first port and the second port is prevented.

6. The differential pressure switching valve according to any one of claims 1 to 5, wherein
all of the first differential pressure on-off valves and the second differential pressure on-off valves are disposed in a single housing.
